Europäisches Patentamt

European Patent Office

Office européen des brevets

(11) Publication number: **0 405 588 B1**

## EUROPEAN PATENT SPECIFICATION

(45) Date of publication of patent specification: **06.09.95**

(21) Application number: **90112473.5**

(22) Date of filing: **29.06.90**

(51) Int. Cl.⁶: **B29C 43/36**, B29C 43/02, B29C 43/18, B29C 43/38, B29C 70/00

(54) Mold for producing a multilayer molded article.

(30) Priority: **30.06.89 JP 170811/89**

(43) Date of publication of application:
**02.01.91 Bulletin 91/01**

(45) Publication of the grant of the patent:
**06.09.95 Bulletin 95/36**

(84) Designated Contracting States:
**BE DE ES FR GB IT NL**

(56) References cited:
**EP-A- 0 186 015**
**EP-A- 0 305 969**
**DE-C- 833 118**
**US-A- 2 797 179**

**L.SORS, I.BALAZS 'Studies in Polymer Science 3 -Design of Plastic Moulds and Dies' 1989 , ELSEVIER , AMSTERDAM**

**G.W.BECKER, D.BRAUN 'Kunstoff Handbuch Band 10 -Duroplaste' 1988 , HANSERVERLAG , MUNICH**

(73) Proprietor: **SUMITOMO CHEMICAL COMPANY, LIMITED**
**Kitahama 4-chome 5-33**
**Chuo-ku**
**Osaka 541 (JP)**

(72) Inventor: **Hara, Takahisa**
**2-10-1-142, Sonehigashino-cho**
**Toyonaka-shi,**
**Osaka-fu (JP)**
Inventor: **Matsumoto, Masahito**
**2-1-133, Kuwata-cho**
**Ibaraki-shi,**
**Osaka-fu (JP)**
Inventor: **Usui, Nobuhiro**
**1-9-1-501, Tamagawa**
**Takatsuki-shi,**
**Osaka-fu (JP)**

(74) Representative: **VOSSIUS & PARTNER**
**Postfach 86 07 67**
**D-81634 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**PLASTICS ENGINEERING.** vol. XL, no. 10, October 1984,GREENWICH, CONN US pages 35 - 38; E.P.MAFILIOS: 'Designing molds to cut-thermoset scrap'

## Description

The present invention relates to a mold for producing a multilayer molded article. More particularly, the present invention relates to a mold for producing a multilayer molded article, which mold can produce a molded resin article having a skin material with preventing squeeze-out of a resin melt during molding and provide a molded article with no blanching, breakage or wrinkle of the skin material.

Resin molded articles are widely used in many products including automobiles and household electric appliances, since such molded article is economical and light and has good moldability.

Since the resin molded articles have some drawbacks such that they have poor appearance or cool feeling and that they are easily flawed, it is desired to provide resin molded articles having good surface properties such as decoration and soft feeling.

Although many attempts have been made to provide such desirable resin molded article, it is impossible for a single kind of resin to have satisfactory moldability and strength and also to provide a molded article having good surface properties.

Then, presently, at least two materials having different functions are composited to produce a multilayer molded article comprising a resin body and a skin material.

As a method for producing the multilayer molded article, there is proposed a method comprising providing a resin melt and the skin material in a cavity formed in a mold which consists of male and female molds and closing the male and female molds whereby the molding of the resin and covering with the skin material are simultaneously done.

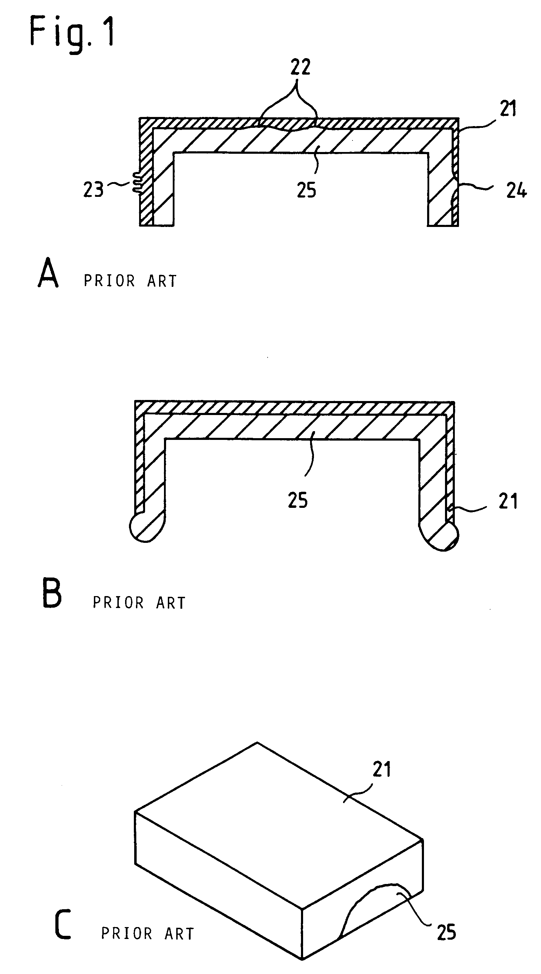

However, in this method, as shown in Fig. 1A, a part of a skin material 21 provided on a resin body 25 is strongly pulled during molding to cause blanching (22) or wrinkles (23) and in some case, said part is broken (24).

In addition, before the closing of the male and female is completed, a quantity of resin melt is squeezed out from an edge of the article to provide a molded article with a deformed shape as shown in Fig. 1B. Further, as shown in Fig. 1C, an edge part of the skin material 21 is broken and a part of the skin material 21 is peeled off to expose the resin body. Such articles have no commercial value.

One object of the present invention is to provide a mold for producing a multilayer molded article, which mold can prevent squeeze-out of a resin melt during molding.

Another object of the present invention is to provide a mold for producing a multilayer molded article having no blanching, breakage or wrinkles of the skin material laminated on the resin body.

Accordingly to the present invention, there is provided a mold for producing a multilayer molded article comprising a resin body and a skin material on a surface of the resin body, which mold consists of male and female molds, wherein the shortest horizontal distance of a mating gap between the horizontally outermost wall surface of the male mold to which the skin material contacts and the horizontally innermost wall surface of the female mold to which the skin material contacts is 0.25 to 3 times the minimum thickness from which the once compressed skin material can restore the original thickness, and the shortest length L in a mold closing direction of a mated part formed between the outermost wall of the male mold to which the resin melt contacts and the innermost wall of a flange of the female mold satisfies the equation:

$$(t_1 - t_0 + 10) \text{ mm} \geq L \geq (t_1 - t_0) \text{ mm}$$

wherein $t_1$ is a distance (mm) between the male and female molds when the resin melt first reaches the horizontally outermost edge of the male mold, and $t_0$ is a distance (mm) in the mold closing direction between the same points on the male and female molds as those used for measuring $t_1$ when the mold closing is completed.

Herein, the wording "minimum thickness from which the once compressed skin material can restore the original thickness" is intended to mean a thickness of the skin material compressed under the maximum force, the skin material compressed under which force can restore the original thickness. Such minimum thickness varies with the material and thickness of the skin material.

Figs. 1A, 1B and 1C show conventional multilayer molded articles having defects,

Fig 2 is a cross sectional view of one embodiment of the mold according to the present invention,

Figs. 3A to 3E schematically show steps for producing a multilayer molded article with the mold according to the present invention.

Now, the present invention will be explained by making reference to the accompanying drawings.

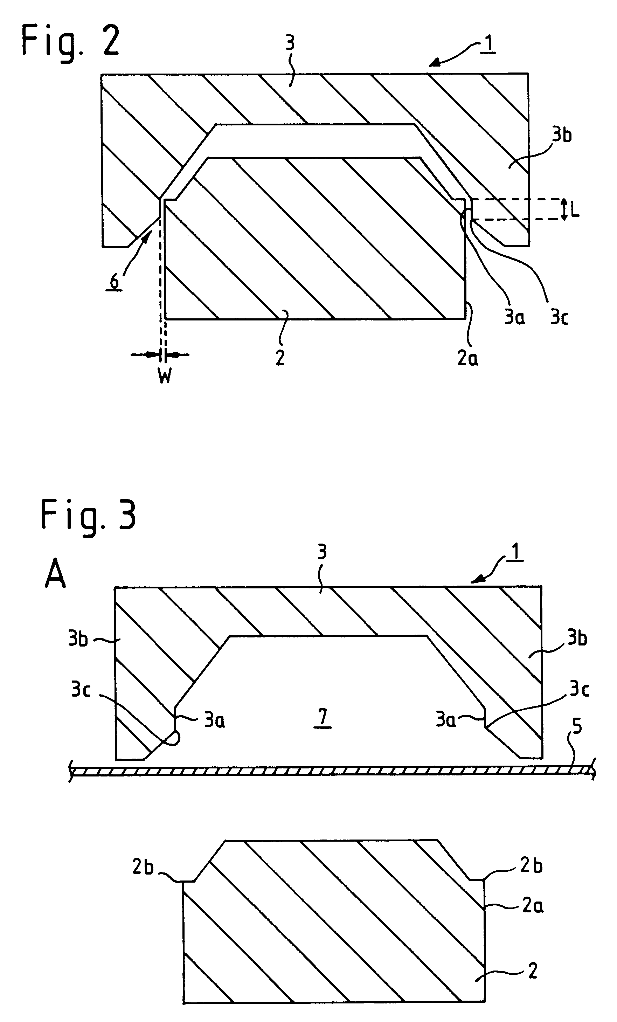

Fig. 2 is a cross sectional view of one embodiment of the mold according to the present invention when the mold closing is completed.

The mold 1 comprises a male mold 2 and a female mold 3 which mates with the male mold 2.

In this embodiment, the male mold 2 is fixed and the female mold 3 is moved vertically with a well known lifting mechanism (not shown). The male mold 2 directly contacts to the resin melt, and the female mold 3 directly contacts to the skin material.

When the mold closing is completed, the shortest horizontal distance (W) is the mating gap 6 between the horizontally outermost wall surface 2a of the male mold 2 to which the skin material contacts and the horizontally innermost wall surface 3a of the female mold 3 to which the skin material contacts is 0.25 to 3 times, preferably 0.5 to 1.5 times the minimum thickness from which the once compressed skin material can restore its original thickness.

The minimum thickness of the skin material from which the once compressed skin material can restore its original thickness is defined above and varies with the kind and original thickness of the skin material. For example, in case of a skin material consisting of a polyvinyl chloride sheet and a polypropylene foam, the skin material can restore the original thickness when it is compressed to a thickness of one fifth of the original thickness. But, since a metal sheet is hardly compressed, its original thickness is substantially equal to such minimum thickness.

The reason why the shortest horizontal distance (W) in the mating gap 6 is adjusted to 0.25 to 3 times the minimum thickness from which the once compressed skin material can restore the original thickness is that, when said distance (W) is smaller than 0.25 times said minimum thickness of the skin material, the skin material tends to be broken before the completion of mold closing, or the skin material may be blanched or wrinkled, while when said distance (W) is larger than 3 times said minimum thickness, the gap between the male and female molds is so large that the resin melt may be squeezed out.

In addition, in the present invention, the shortest length L in the mold closing direction of the mated part formed between the outermost wall of the male mold to which the resin melt contacts and the innermost wall of the flange of the female mold satisfies the equation:

$$(t_1 - t_0 + 10) \text{ mm} \geq L \geq (t_1 - t_0) \text{ mm}$$

wherein $t_1$ and $t_0$ are the same as defined above.

The reason why the shortest length L in the mold closing direction is adjusted in the above range is that, when the length L is longer than the above upper limit, the skin material is partly strongly pulled so that the skin material tends to be blanched or broken in an extreme case, while when said length L is shorter than the above lower limit, the resin melt tends to be squeezed out so that the defect molded article may be produced.

The shortest length of the mated part in the molding direction is not necessarily uniform around the whole circumference of the mold. At least at a point P of the horizontally outermost edge of the male mold to which the resin melt first contact, the shortest length L of the mated part should satisfy the above equation. At other points, the length of the mated part may be from zero to L.

With the mold according to the present invention, the multilayer molded article can be produced by the following steps:

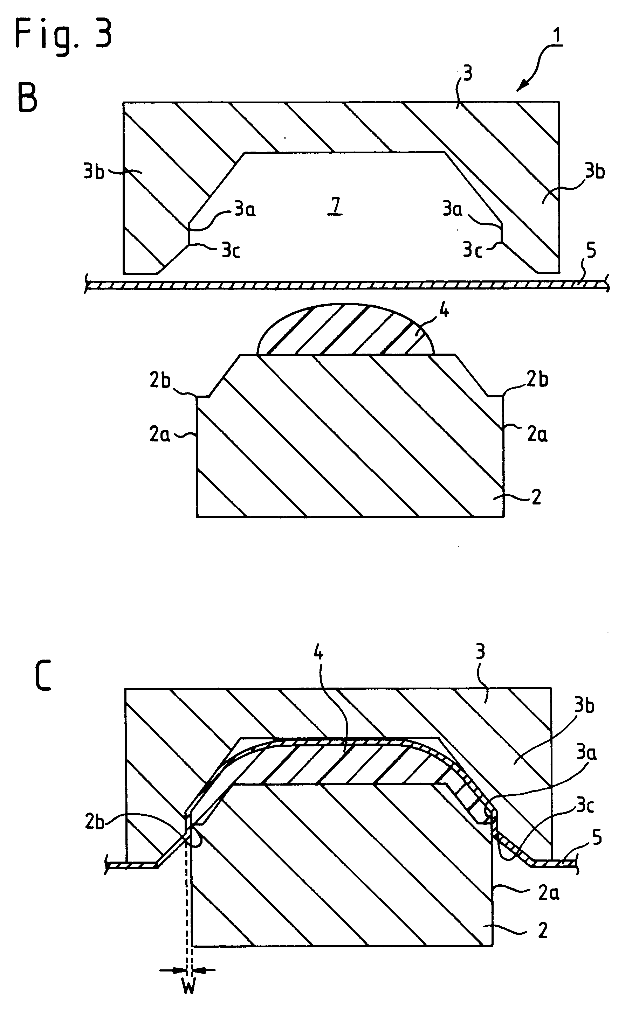

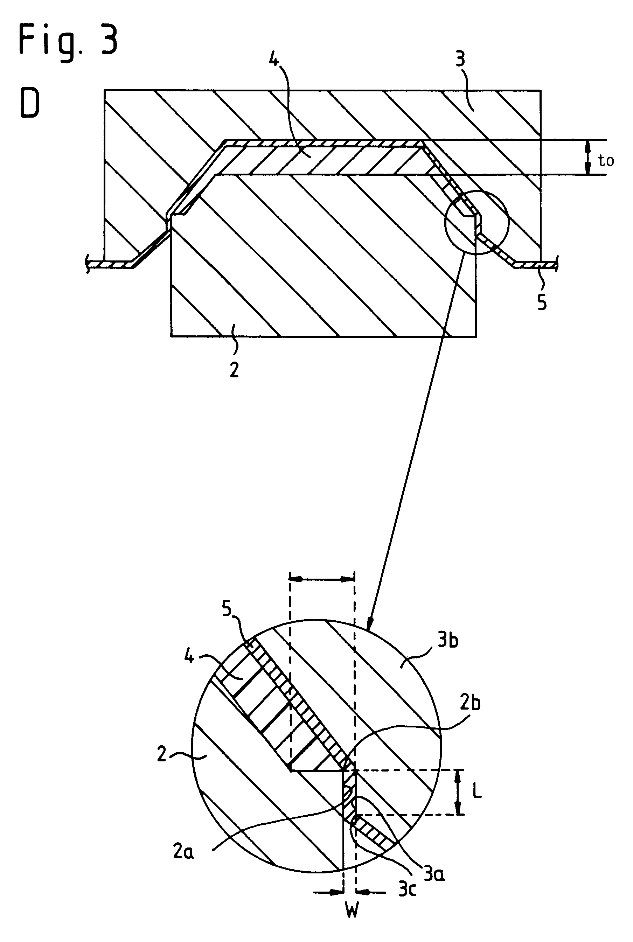

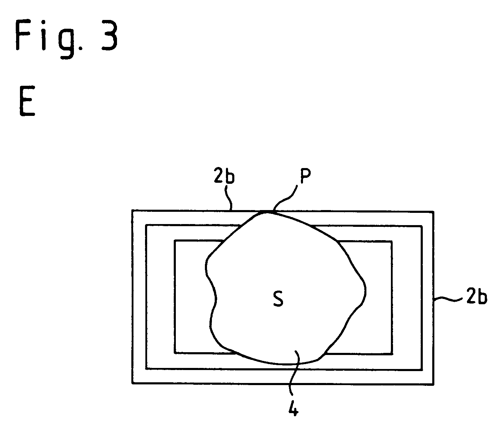

1. First, the skin material 5 is supplied between the male mold 2 and the female mold 3 (see Fig. 3A).
2. Between the male mold 2 and the female mold 3, a mass of resin melt 4 is supplied. In Fig. 3B, the mass of resin melt is supplied on the male mold 3 below the skin material 5.

The resin melt can be supplied by a per se conventional means. For example, the resin melt is supplied through a resin supplying conduit which is formed in the mold (not shown) with means for melting and plasticizing the resin such as an extruder (not shown).

3. By actuating the lifting mechanism, the female mold is lowered to press the skin material and then the resin melt, whereby the resin melt flows and spreads between the skin material 5 and the surface osf the male mold 3. Simultaneously, the skin material is pressed against the inner wall of the female mold. (see Fig. 3C).
4. The female mold is further lowered, and finally, the male and female molds are completely closed to complete the molding of resin (see Fig. 3D). Thereby, a multilayer resin molded article comprising the resin body and the skin material is produced. Since the horizontally shortest distance (W) and the shortest length (L) of the mated part are in the above ranges defined by the present invention, the skin material 5 is not broken, or the part of the skin material 5 near the edges of the article is not blanched or wrinkled.

In the molding process, the timing of the resin melt supply is not limited to the above described timing. The resin melt can be supplied at any time before the male and female molds are completely closed.

The resin melt can be supplied between the skin material and either of the male and female molds. Therefore, the present invention can be applied for inner lining and outer lining.

The relative position of the male and female molds and the closing direction can be freely selected.

Specific examples of the skin material are woven or non-woven fabric, nets made of metals, fibers or thermoplastic resins, paper, metal foils, and a sheet or a film of a thermoplastic resin or elastomer. The skin material may be decorated with uneven patterns such as grain patterns, printing, dying and the like. In addition, the skin material may be made of foamed materials of thermoplastic resins or rubbers. Also, a laminate comprising at least two layers each made of the same material or different materials which are bonded to each other with an adhesive can be used as the skin material. Before the skin material is supplied in the mold, a part or whole of the skin material may be preheated to adjust tensile stress and elongation.

As the resin to be molded with the mold of the present invention, any of the conventional resins used in compression molding, injection molding and extrusion molding can be used. Specific examples of the resin are non-expandable or expandable resins of thermoplastic resins (e.g. polypropylene, polyethylene, polystyrene, acrylonitrile-styrene-butadiene copolymer, nylon, etc.), and thermoplastic elastomers (e.g. ethylene-propylene block copolymer, styrene-butadiene block copolymer, etc.). The resin may contain at least one additive such as fillers (e.g. inorganic fillers and glass fibers), pigments, lubricants, anti-static agents and the like.

## Claims

1. A mold for producing a multilayer molded article comprising a resin body and a skin material on a surface of the resin body, which mold consists of male and female molds, wherein the shortest horizontal distance of a mating gap between the horizontally outermost wall surface of the male mold to which the skin material contacts and the horizontally innermost wall surface of the female mold to which the skin material contacts is 0.25 to 3 times the minimum thickness from which the once compressed skin material can restore the original thickness, and the shortest length L in a mold closing direction of a mated part formed between the outermost wall of the male mold to which the resin melt contacts and the innermost wall of a flange of the female mold satisfies the equation:

$$(t_1 - t_0 + 10) \text{ mm} \geq L \geq (t_1 - t_0) \text{ mm}$$

wherein $t_1$ is a distance (mm) between the male and female molds when the resin melt first reaches the horizontally outermost edge of the male mold, and $t_0$ is a distance (mm) in the mold closing direction between the same points on the male and female molds as those used for measuring $t_1$ when the mold closing is completed.

2. The mold according to claim 1, wherein the shortest horizontal distance of the mating gap is 0.5 to 1.5 times the minimum thickness from which the once compressed skin material can restore the original thickness.

## Patentansprüche

1. Form zum Herstellen eines mehrschichtigen Formgegenstands mit einem Kunststoffkörper und einem auf der Oberfläche des Kunststoffkörpers angeordneten Außenschichtmaterial, wobei die Form aus einer Patrize und einer Matrize besteht, wobei der kürzeste horizontale Abstand eines Paßabschnittspalts zwischen der horizontal am weitesten außen angeordneten Wandfläche der Patrize, mit dem das Außenschichtmaterial in Kontakt kommt, und der horizontal am weitesten innen angeordneten Wandfläche der Matrize, mit der das Außenschichtmaterial in Kontakt kommt, den 0.25- bis 3-fachen Wert der minimalen Dicke aufweist, bei der das zusammengepreßte Außenschichtmaterial seine ursprüngliche Dicke wiedergewinnen kann, und die kürzeste Länge L in einer Formschließrichtung eines Paßabschnitts, der zwischen der äußersten Wand der Patrize, mit der die Kunststoffschmelze in Kontakt kommt, und der innersten Wand eines Flansches der Matrize gebildet wird, die Beziehung erfüllt:

$$(t_1 - t_0 + 10) \text{ mm} \geq L \geq (t_1 - t_0) \text{ mm},$$

wobei $t_1$ ein Abstand (mm) zwischen der Patrize und der Matrize ist, wenn die Kunststoffschmelze zuerst den horizontal am weitesten außen angeordneten Rand der Patrize erreicht, und $t_0$ ein Abstand (mm) in der Formschließrichtung zwischen den gleichen Punkten auf der Patrize und der Matrize ist, wie diejenigen Punkte, die zum Messen von $t_1$ verwendet werden, wenn die Form vollständig geschlossen ist.

2. Form nach Anspruch 1, wobei der kürzeste horizontale Abstand des Paßabschnittspalts den 0.5- bis 1.5-fachen Wert der minimalen Dicke aufweist, bei der das zusammengedrückte Außenschichtmaterial seine ursprüngliche Dicke wiedergewinnen kann.

## Revendications

1. Moule destiné à la fabrication d'un article multicouche moulé comprenant un corps d'une résine et un matériau de revêtement à la surface du corps de résine, le moule étant constitué de moules mâle et femelle, dans lequel la plus courte distance horizontale dans un espace de coopération entre la surface de paroi horizontalement la plus externe du moule mâle avec laquelle est en contact le matériau de revêtement et la surface de paroi horizontalement la plus interne du moule femelle avec laquelle le matériau de revêtement est en contact, est comprise entre 0,25 et 3 fois l'épaisseur minimale à partir de laquelle le matériau de revêtement, lorsqu'il a été comprimé, peut reprendre l'épaisseur d'origine, et la plus courte distance L dans la direction de fermeture du moule d'une partie de coopération formée entre la paroi externe du moule mâle avec laquelle est en contact la résine fondue et la paroi la plus interne d'un flasque du moule femelle correspond à l'équation

$$(t_1 - t_0 + 10)\ mm \geq L \geq (t_1 - t_0)\ mm$$

$t_1$ étant une distance (mm) compris entre les moules mâle et femelle lorsque la résine fondue a atteint initialement le bord horizontalement le plus externe du moule mâle, et $t_0$ étant une distance (mm) dans la direction de fermeture du moule comprise entre les mêmes points sur les moules mâle et femelle que ceux qui sont utilisés pour la mesure de la distance $t_1$ lorsque la fermeture du moule est terminée.

2. Moule selon la revendication 1, dans lequel la plus courte distance horizontale dans l'espace de coopération est comprise entre 0,5 et 1,5 fois l'épaisseur minimale à partir de laquelle le matériau de revêtement, lorsqu'il a été comprimé, peut reprendre son épaisseur d'origine.

# Fig.1

A   PRIOR ART

B   PRIOR ART

C   PRIOR ART

Fig. 2

Fig. 3

A

EP 0 405 588 B1

Fig. 3

B

C

9

Fig. 3
D

Fig. 3
E